# EUROPEAN PATENT SPECIFICATION

(11) **EP 2 108 477 B1**
(45) Date of publication and mention of the grant of the patent: **23.03.2011**
(21) Application number: 08154234.2
(22) Date of filing: 09.04.2008
(51) Int. Cl.: B23P 6/00, F01D 5/00

(54) **Gas turbine hot gas component repair method**
Verfahren zur Reparatur der Heißgaskomponente einer Gasturbine
Procédé de réparation de composants à gaz chauds de turbine à gaz

(43) Date of publication of application: 14.10.2009
(73) Proprietor: Alstom Technology Ltd, 5400 Baden (CH)
(72) Inventor: Hövel, Simone, 5408 Ennetbaden (CH); Stankowski, Alexander, Dr., 5303 Würenlingen (CH); Ambrosy, Günter, 5400 Baden (CH); Hoebel, Matthias, Dr., 5210 Windisch (CH); Schnell, Alexander, Dr., 5400 Baden (CH); Bissig, Hans, 5610 Wohlen (CH); Kurtz, Rainer, 5405 Baden-Rütihof (CH)

(56) References cited:
- EP-A- 1 238 742
- EP-A- 1 867 423
- JP-A- 9 168 927
- JP-A- 2001 207 803
- US-B1- 7 051 435

## Description

The invention relates to a method of repairing hot gas components of a gas turbine engine.

### STATE OF THE ART

In a gas turbine engine hot gas components such as the stator heat shield can become damaged or worn during service. Due to the cost of the components, repair can be preferred over replacement (see for example EP-A-1 867 423).

Repair methods include methods that involve completely removing a through section of a damaged portion of the component and replacing it with a replacement part. For example US 6,508,000 describes a repair method where a 3D featured replacement part having curved surfaces with corners and edges is fitted by means of transient liquid phase bonding. The shape requirement of the replacement part is required in order to align and hold the part during bonding. The method therefore is not suitable where the repair surface is essentially two-dimensional.

US 6,199,746 provides another repair method where the component defect is removed by creating an aperture with sloping sides. The slope essentially creates a 3D feature enabling the fitting of a similarly side-sloped plug by forcing the plug into the aperture and subsequently bonding it to the component. While this method enables repair of some essentially two-dimensional defective portions the forcing of the plug into the aperture potentially creates stress regions and/or defects, affecting component integrity.

Removing a through section of a defective portion, as provided in US 6,508,000 and US 6,199,746, means that the replacement part must be able to withstand the full operating stress the component is subject to and therefore material and bond integrity is critical. Where the defect does not penetrate through the depth of the component and so there is no need to remove a through section of the component it is desirable to have an alternative repair method.

Laser metal forming can be used to repair damaged portions having two-dimensional shape by building up a metal layer to replace or remove the damaged regions. The method is however not suitable where significant metal depth is required as the process is both expensive and time consuming.

As an alternative US 6,998,568 describes a two step method that includes brazing a replacement coupon into a cavity made within the damaged component and then completing the repair using laser metal forming to build up coupon depth so as to reestablish wall thickness requirements. Although disadvantaged by being a two-step process the demands of a high tolerance replacement part is reduced and the disadvantage of the laser metal forming process is reduced although significant time-consuming laser metal forming is still required. In addition the coupon must be fixed by mechanical means such as clamping during the brazing step, a difficult task for some complex shaped components or by tack welded shims that have to be subsequently removed. This may result in at best the requirement for several different repair cycles if more than one defect needs to be repaired or at worst the unsuitability of the method.

### SUMMARY OF THE INVENTION

The invention is intended to provide a method of repairing hot gas components of a gas turbine engine addressing the problem of fixing replacement coupon during repair and providing an alternative method to rebuilding of the component thickness.

This problem is solved by means of the subject matter of the independent claim. Advantageous embodiments are given in the dependent claims.

Accordingly provided is a gas turbine engine component repair method for defects that do not extend through the thickness of the component including the steps of:
a) machining at least one cavity in the surface of a component so as to remove one or more defects from the component;
b) manufacturing one or more coupons fittable within the or each cavity;
c) applying binder free brazing medium to the or each coupon;
d) fitting of the or each coupon into the or each cavity;
e) joining the or each coupon to the component at an outer edge of the or each coupon;
f) applying braze medium to the or each coupon as a means to achieve the thickness requirement of the component ; and
g) subjecting the component to a single brazing cycle wherein within the cycle: the or each coupon is brazed to the base metal and the brazing medium is brazed to the outer surface of the or each coupon.

The method is therefore suitable for repairing component portions where mechanical fixing of repair coupons to damaged portions of the component during thermal treatment is difficult or not desired and so enables repair of a wider range of components. It also provides a useful alternate means of building up the metal thickness over a repair coupon that is simpler, easier and quicker than laser metal forming or other metal build-up processes.

In another aspect step g) is the only thermal cycle and the cycle includes brazing the or each coupon to the component enabling further optimization of the repair cycle reducing repair time and cost.

In one aspect of the invention step f) includes applying braze medium to a portion of the component providing a means of building up component metal thickness as well as that of the repaired portion.

Another aspect provides that before step c) the step of machining a surface of the or each coupon so as to further reduce the manufacturing tolerance requirements of the or each coupon.

In yet another aspect the method provides that the joining step of step e) is either by laser metal forming, electron beam welding or TIG welding and created joint is heat treated as part of step g). In an aspect the joint is made along discrete points of the edge reducing the time to make the joint and any rework required to contour it afterwards although preferably the joint is made so as to not affect the contour between the component and the coupons. In an aspect this is done by laser metal forming along the outer edge of the coupon.

In yet another aspect the method includes the step of re-contouring after step g).

The method can be used to repair any gas turbine engine hot gas component, including those made from single crystal, directional solidified or conventionally cast material.

A further object of the invention to overcome or at least ameliorate the disadvantages and shortcomings of the prior art or provide a useful alternative.

Other objectives and advantages of the present invention will become apparent from the following description, taken in connection with the accompanying drawings wherein by way of illustration and example, an embodiment of the invention is disclosed.

### BRIEF DESCRIPTION OF THE DRAWINGS

By way of example, an embodiment of the invention is described more fully hereinafter with reference to the accompanying drawings, in which:
Figure 1 is a perspective view a component portion with fitted coupons of the invention;
Figure 2 is a perspective view of Fig 1 with a layer of brazing material covering coupons and a portion of the component.

### DETAILED DESCRIPTION OF THE INVENTION

Preferred embodiments of the present invention are now described with reference to the drawings, wherein like reference numerals are used to refer to like elements throughout. In the following description, for purposes of explanation, numerous specific details are set forth in order to provide a thorough understanding of the invention. It may be evident, however, that the invention may be practiced without these specific details. In other instances, well-known structures and devices are shown in block diagram form in order to facilitate description of the invention.

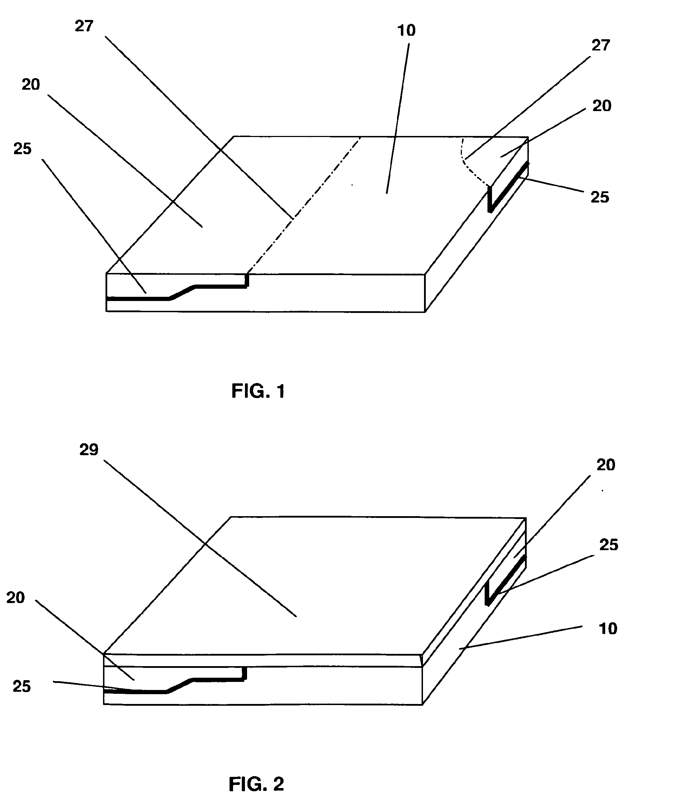

As shown in Fig 1 and Fig 2 a preferred embodiment provides a repair method for repairing a defect on a component without penetrating through the component and is suitable for repairing defects that including cracks, cavities and surface irregularities. The method includes fitting coupons 20 inside cavities created in the surface of the component 10 and fixing them to the component by laser metal forming/ welding or other means. Vacuum brazing then bonds the coupon 20 to the component 10 and restores wall thickness and shape without the need for mechanical fixing of the coupon 10 during the vacuum brazing cycle and as a result more than one defect can be repaired during the single cycle.

In detail, the method includes machining of one or more damaged portions of a component to remove defects so by forming cavities on the surface of the component 10. Coupons 20 are then manufactured to fit inside each of the cavities preferably with allowance for the thickness of the braze material so as to optimize gap control. Further preferably at least part of the surface of coupons 20 is shaped by machining so as to yet further relax manufacturing tolerances.

Brazing medium 25 of any known suitable form but preferably pre-sintered form or other binder free form is applied to each cavity so that when coupons are fitted the brazing medium forms a barrier layer between coupons 20 and walls of the cavity enabling the interface to be bonded during a subsequent vacuum brazing cycle or in an alternative embodiment in a later heat treatment step.

Coupons 20 are then inserted into cavities. In one embodiment the component undergoes a thermal cycle to braze the coupon to the component before fixing to the component 10. Fixing is preferably by laser metal forming, laser metal joining, electron beam welding, TIG or other joining methods preferably along discrete points or alternatively continuously along the coupon edge / component interface. The joint is preferably formed so as to be near final shape, preferably by laser metal forming, so as to eliminate the need for further reshaping and/or so as to further relax the manufacturing tolerance of the coupon.

In another embodiment coupons are fixed without a prior brazing cycle The weld / joint 27 of the fixing method provides hold on the coupon so by eliminating the need for additional mechanical holding aids such as clamping or the tack welding of shims that subsequently must be removed, required to fix coupons during subsequent heat treatment. In this way the applicability of the method is extended to the repair of component portions not suitable for clamping or at least provides a useful alternative to known fixing methods.

Where laser metal joining is used as the fixing means preferably is it done by fiber coupling where the output end of the fiber is connected to either a robot or CNC work cell while preferably a galvano scanner does the beam manipulation. The laser is preferably a fiber or disk laser with a beam parameter product of less than 10mm*mrad and preferably uses the principle of adaptive machining, where a 3D vision system is integrated into the process and the results from the 3D geometry scanning are used to individually adapt a pre-programmed welding strategy to each part. Preferably an online temperature measurement system provides input to an active feedback controller in order to maintain optimum operating weld conditions during metal joining.

Before the damaged base material undergoes a vacuum brazing cycle the fitted coupons 20 and preferably neighboring surfaces of the component 10 are covered preferably with a continuous layer of brazing medium 29. This provides a means of adding metal to the component.

A vacuum brazing cycle then brazes brazing medium to the outer surface of the coupon 20 and preferably heat treats the coupon / component joint 27. In another embodiment with only a single heat treatment cycle, the cycle also bonds each fitted coupon 20.

As a finishing step preferably the repaired surface is re-contoured so that the repaired article's final dimensions are reestablished although the need for the step is component depend.

Although the invention has been herein shown and described in what is conceived to be the most practical and preferred embodiment, it is recognized that departures can be made within the scope of the invention, which is not to be limited to details described herein but is to be accorded the full scope of the appended claims so as to embrace any and all equivalent devices and apparatus.

### REFERENCE NUMBERS

10. Component
20. Coupon
25. Binder free braze material between cavity wall and coupon
27.Spot-welded joint between edge of coupon and component
29. Braze medium in the form of foil or a sheet

## Claims

1. A gas turbine engine hot gas component repair method for defects that do not extend through the thickness of the component, including the steps of:
a) machining at least one cavity in the surface of the component (10) so as to remove one or more defects from the component;
b) manufacturing one or more coupons (20) fittable within the or each cavity;
c) applying binder free brazing medium (25) to the or each coupon to enable brazing of the coupon to the component;
d) fitting the or each coupon (20) into the or each cavity;
e) joining the or each fitted coupon (20) to the component (10) at an outer edge of the or each coupon (20); the method being **characterised by** :
f) applying brazing medium (29) to the or each joined coupon (20) to cover the or each joined coupon and form an outer surface of the component so by providing a means to achieve the thickness requirement of the component (10); and
g) subjecting the component (10) to a thermal cycle wherein the brazing medium (29) is brazed to the outer surface of the or each coupon (20).

2. The method of claim 1 wherein step g) is the only thermal cycle and the cycle includes brazing the or each coupon (20) to the component (10).

3. The method of claim 1 or claim 2 wherein step f) includes applying the brazing medium (29) to a portion of the component (10) surrounding the or each joined coupon (20)..

4. The method of any one of claims 1 to 3 wherein the joining step of step e) is either by laser metal forming or electron beam welding and created joint is heat treated as part of step g).

5. The method of any one of claims 1 to 3 wherein the joining step of step e) is by TIG welding and the created joint is heat treated as part of step g).

6. The method of any one of claim 1 to 5 wherein the joining is along discrete points.

7. The method of claim 4 wherein joining is by laser metal forming along the outer edge of the coupon so as create a near final shape joint.

8. The method of any one of claims 1 to 7 further including the step of re-contouring after step g).

9. The method of any one of claims 1 to 8 wherein the component (10) is made from single crystal or directionally solidified material.

10. The method of any one of claims 1 to 8 wherein the component (1) is made from conventionally cast material.

## Patentansprüche

1. Reparaturverfahren für Heißgasbauteile eines Gasturbinenmotors für Schäden, welche sich nicht durch die Dicke des Bauteils hindurch erstrecken, umfassend die Schritte:
a) spanabhebendes Bearbeiten wenigstens einer Aushöhlung in der Oberfläche des Bauteils (10), um so einen oder mehrere Schäden von dem Bauteil zu entfernen;
b) Herstellen eines oder mehrerer Einsatzstücke (20), welche in die eine oder jede Aushöhlung einsetzbar sind;
c) Aufbringen eines bindemittelfreien Lötmediums (25) auf das eine oder jedes Einsatzstück, um das Einlöten des Einsatzstückes an dem Bauteil zu ermöglichen;
d) Einpassen des einen oder jedes Einsatzstückes (20) in die eine oder jede Aushöhlung;
e) Verbinden des einen oder jedes Einsatzstückes (20) mit dem Bauteil (10) an einer äußeren Kante des einen oder jedes Einsatzstückes (20); wobei das Verfahren **gekennzeichnet ist durch**:
f) Aufbringen eines Lötmediums (29) auf das eine oder jedes verbundene Einsatzstück (20), um das eine oder jedes verbundene Einsatzstück zu bedecken und eine äußere Oberfläche des Bauteils **durch** Bereitstellen eines Mittels auszubilden, um so das Dickeerfordernis des Bauteils (10) zu erzielen; und
g) Unterwerfen des Bauteils (10) einem thermischen Zyklus, wobei das Lötmedium (29) an der äußeren Oberfläche des einen oder jedes Einsatzstückes (20) aufgelötet wird.

2. Verfahren nach Anspruch 1, wobei Schritt g) der einzige thermische Zyklus ist und der Zyklus das Anlöten des einen oder jedes Einsatzstückes (20) an dem Bauteil (10) umfasst.

3. Verfahren nach Anspruch 1 oder Anspruch 2, wobei Schritt f) das Aufbringen von Lötmedium (29) auf einen Abschnitt des Bauteils (10), welcher das eine oder jedes verbundene Einsatzstück (20) umgibt, umfasst.

4. Verfahren nach jedem beliebigen der Ansprüche 1 bis 3, wobei der Verbindungsschritt des Schritts e) entweder durch Lasermetallumformen oder Elektronenstrahlschweißen erfolgt und die erzeugte Verbindungsstelle als Teil von Schritt g) wärmebehandelt wird.

5. Verfahren nach jedem beliebigen der Ansprüche 1 bis 3, wobei der Verbindungsschritt des Schritts e) durch WIG-Schweißen erfolgt und die erzeugte Verbindungsstelle als Teil von Schritt g) wärmebehandelt wird.

6. Verfahren nach jedem beliebigen der Ansprüche 1 bis 5, wobei das Verbinden entlang einzelner Punkte erfolgt.

7. Verfahren nach Anspruch 4, wobei das Verbinden durch Lasermetallumformen entlang der äußeren Kante des Einsatzstückes so erfolgt, um eine Verbindung in nahezu endbehandelter Form zu erzeugen.

8. Verfahren nach jedem beliebigen der Ansprüche 1 bis 7, des Weiteren umfassend den Schritt des erneuten Formgebens nach Schritt g).

9. Verfahren nach jedem beliebigen der Ansprüche 1 bis 8, wobei der Bauteil (10) aus einem einkristallinen oder aus einem gerichtet erstarrten Material hergestellt ist.

10. Verfahren nach jedem beliebigen der Ansprüche 1 bis 8, wobei der Bauteil (10) aus herkömmlich gegossenem Material hergestellt ist.

## Revendications

1. Procédé de réparation des composants exposés aux gaz chauds d'un moteur à turbine à gaz, en vue de détecter des défauts qui ne s'étendent pas à travers toute l'épaisseur du composant, le procédé comprenant les étapes qui consistent à :
a) usiner au moins une cavité dans la surface du composant (10) de manière à enlever un ou plusieurs défauts du composant,
b) fabriquer une ou plusieurs pièces (20) qui peuvent s'ajuster dans la ou les cavités,
c) appliquer un agent de brasage (25) exempt de liant sur la pièce ou chacune des pièces pour permettre de braser la pièce sur le composant,
d) ajuster chaque pièce (20) dans la ou les cavités,
e) relier la pièce ou chacune des pièces ajustées (20) au composant (10) sur le bord extérieur de la ou de chacune des pièces (20),
le procédé étant **caractérisé par** les étapes qui consistent à :
f) appliquer un moyen de brasage (29) sur la pièce ou chacune des pièces (20) reliées, pour couvrir la pièce ou chacune des pièces reliées et former une surface extérieure du composant en prévoyant un moyen qui permet de satisfaire les conditions d'épaisseur du composant (10) et
g) faire subir au composant (10) un cycle thermique dans lequel le moyen de brasage (29) est brasé sur la surface extérieure de la pièce ou de chacune des pièces (20).

2. Procédé selon la revendication 1, dans lequel l'étape g) est un unique cycle thermique, le cycle comprenant le brasage de la pièce ou de chacune des pièces (20) sur le composant (10).

3. Procédé selon la revendication 1 ou la revendication 2, dans lequel l'étape f) comprend l'étape qui consiste à appliquer le moyen de brasage (29) sur une partie du composant (10) qui entoure la pièce ou chacune des pièces (20) jointes.

4. Procédé selon l'une quelconque des revendications 1 à 3, dans lequel l'étape de jonction de l'étape e) s'effectue par façonnage de métaux au laser ou soudage par faisceau d'électrons, la jonction formée étant traitée thermiquement dans le cadre de l'étape g).

5. Procédé selon l'une quelconque des revendications 1 à 3, dans lequel l'étape de jonction de l'étape e) s'effectue par soudage TIG et la jonction formée est traitée thermiquement dans le cadre de l'étape g).

6. Procédé selon l'une quelconque des revendications 1 à 5, dans lequel la jonction s'effectue en des points distincts.

7. Procédé selon la revendication 4, dans lequel la jonction s'effectue par façonnage de métaux au laser sur le bord extérieur de la pièce de manière à créer une jonction dont la forme est proche de la forme finale.

8. Procédé selon l'une quelconque des revendications 1 à 7, comprenant en outre l'étape de reprofilation après l'étape g).

9. Procédé selon l'une quelconque des revendications 1 à 8, dans lequel le composant (10) est constitué d'un matériau monocristallin ou solidifié directionnellement.

10. Procédé selon l'une quelconque des revendications 1 à 8, dans lequel le composant (10) est réalisé d'un matériau coulé classiquement.
